# EUROPÄISCHE PATENTSCHRIFT

(11) **EP 1 185 884 B1**
(45) Veröffentlichungstag und Bekanntmachung des Hinweises auf die Patenterteilung: **14.05.2008**
(21) Anmeldenummer: 01915002.8
(22) Anmeldetag: 03.02.2001
(51) Int. Cl.: G01S 15/08, G01S 13/86, G01S 13/08

(54) **ENTFERNUNGSMESSGERÄT**
TELEMETER
TELEMETRE

(30) Priorität: 23.03.2000 DE 10014539
(43) Veröffentlichungstag der Anmeldung: 13.03.2002
(73) Patentinhaber: ROBERT BOSCH GMBH, 70442 Stuttgart (DE)
(72) Erfinder: LEUTZ, Steffen, 69256 Mauer (DE); FLINSPACH, Gunter, 71229 Leonberg (DE)
(86) Internationale Anmeldenummer: PCT/DE2001/000421
(87) Internationale Veröffentlichungsnummer: WO 2001/071379

(56) Entgegenhaltungen:
- EP-A- 0 310 045
- EP-A- 0 450 334
- US-A- 4 574 368
- US-A- 4 953 141
- US-A- 5 773 721
- US-A- 6 157 591

## Beschreibung

### Stand der Technik

Die Erfindung geht aus von einem Entfernungsmeßgerät nach dem Oberbegriff des Anspruchs 1.

Ultraschallmeßgeräte senden mit einer Sendeeinheit eine sich divergent ausbreitende Schallwelle aus, die von einer Zielfläche eines Gegenstands reflektiert und von einer Empfangseinheit des Ultraschallmeßgeräts empfangen wird. Über eine Laufzeitmessung der Schallwelle kann beispielsweise eine Entfernung bestimmt werden.

Um zu visualisieren, ob der Gegenstand wunschgemäß angepeilt ist, ist bekannt, im Entfernungsmeßgerät einen Lichtzeiger zu integrieren, über den ein Lichtstrahlbündel ausgesendet werden kann. Als Lichtquelle wird entweder eine Glühlampe verwendet, deren Licht über eine Linse gebündelt wird, oder es wird ein Laser verwendet, der ein Lichtstrahlbündel aussendet.

Dokument US 4 953 141 A offenbart ein Ultraschallmeßgerät wobei ein weitgehend mit dem Meßsignal übereinstimmender Lichtstrahl ausgesendet wird.

### Vorteile der Erfindung

Die Erfindung geht aus von einem Entfernungsmeßgerät mit einem sich divergent ausbreitenden Meßsignal, insbesondere Ultraschall und/oder Radar, und einem zumindest eine Lichtquelle aufweisenden Lichtzeiger.

Es wird vorgeschlagen, daß über den Lichtzeiger mehrere, in der Anzahl begrenzte und zueinander sich divergent ausbreitende Lichtstrahlbündel aussendbar sind, die im wesentlichen das Meßsignal mit seinem Divergenzwinkel kennzeichnen. Durch mehrere zueinander sich divergent ausbreitende Lichtstrahlbündel kann der Divergenzwinkel des Meßsignals und die Größe einer Zielfläche des Meßsignals bei einer bestimmten Entfernung vorteilhaft kenntlich gemacht werden, beispielsweise für einen Bediener oder für eine weitere Vorrichtung, die die Lichtstrahlbündel direkt oder an einem Gegenstand reflektierende Lichtanteile der Lichtstrahlbündel mit einer optischen Empfangseinheit erfaßt und die erfaßten Werte zur automatischen Steuerung eines Vorgangs verwertet, beispielsweise zur Steuerung eines Meßvorgangs. Meßfehler durch Gegenstände zwischen dem Entfernungsmeßgerät und einer entfernten Stelle, an denen das Meßsignal reflektiert wird, können vermieden werden.

Ferner kann durch die begrenzte Anzahl der Lichtstrahlbündel, das einzelne Lichtstrahlbündel mit einer hohen Intensität ausgeführt und es kann mit einer konstruktiv einfachen, kostengünstigen und von der Leistung zulässigen Konstruktion eine gewünschte Kennzeichnung des Meßsignals über eine große Distanz erreicht werden.

Es können verschiedene, dem Fachmann als sinnvoll erscheinende Lichtquellen verwendet werden, wie beispielsweise Glühlampen, spezielle leistungsstarke Dioden usw. Die Lichtquellen können für das menschliche Auge nicht sichtbares Licht und/oder vorteilhaft sichtbares Licht erzeugen, wodurch neben einer Empfangsoptik einer zweiten Vorrichtung das Meßsignal mit seinem Divergenzwinkel von einem Bediener erkannt werden kann.

Besonders vorteilhaft ist zumindest eine Lichtquelle von einem Laser gebildet. Mit einem Laser können ein vorteilhaftes kollimiertes Lichtstrahlbündel und in großen Entfernungen eine hohe Lichtdichte erreicht werden. Die von den Lichtstrahlbündeln verursachten Lichtflecke können von einem Bediener und von einer Empfangsoptik einer zweiten Vorrichtung gut erkannt werden. Die Lichtstrahlbündel können kontinuierlich und/oder vorteilhaft gepulst ausgesendet werden. Mit gepulsten Lichtstrahlbündeln kann zum einen Energie eingespart und zum anderen kann eine stärkere Beachtung der durch die Lichtstrahlbündel gebildeten Lichtflecke erreicht werden.

In einer weiteren Ausgestaltung der Erfindung wird vorgeschlagen, daß zumindest mehrere Lichtstrahlbündel einer gemeinsamen Lichtquelle entstammen, und die zueinander divergierenden Lichtstrahlbündel aus einem Lichtstrahlbündel über eine Optik erzeugt sind. Zusätzliche Lichtquellen, Bauraum, Gewicht, Montageaufwand und Kosten können eingespart werden. Grundsätzlich kann der Lichtzeiger jedoch auch mit mehreren Lichtquellen ausgeführt sein, insbesondere mit mehreren leistungsstarken Dioden.

Ein Lichtstrahlbündel einer Lichtquelle kann durch verschiedene, dem Fachmann als sinnvoll erscheinende Optiken in mehrere Lichtstrahlbündel aufgeteilt werden, beispielsweise durch reflektierende und/oder das Licht brechende Optiken usw. Sendet die Lichtquelle jedoch kohärentes Licht, insbesondere Laserlicht aus, wird die Optik vorteilhaft mit einer diffraktiven Linse ausgeführt, die ein Beugungsgitter aufweist. Über das Beugungsgitter können Bereiche mit einer konstruktiven Interferenz erreicht werden, d.h. helle Bereiche, durch die die Lichtstrahlbündel austreten, und es können Bereiche mit einer destruktiven Interferenz erreicht werden, d.h. dunkle Bereiche, durch die kein Licht austritt. Diffraktive Linsen mit entsprechenden Beugungsgittern können besonders kostengünstig und einfach mit großer Lagetoleranz montiert werden.

Eine gute Kennzeichnung des Meßsignals mit seinem Divergenzwinkel bei gleichzeitig hoher Intensität der einzelnen Lichtstrahlbündel wird vorteilhaft erreicht, indem über den Lichtzeiger gleichzeitig mehr als zwei und weniger als vierzehn Lichtstrahlbündel aussendbar sind. Besonders vorteilhaft sind sechs Lichtstrahlbündel ungleichmäßig oder vorzugsweise gleichmäßig auf einer Kegelmantelfläche verteilt angeordnet.

In einer weiteren Ausgestaltung wird vorgeschlagen, daß über den Lichtzeiger ein Zentrumlichtstrahlbündel aussendbar ist. Insbesondere bei einer diffraktiven Optik kann der Aufwand vermieden werden, ein Zentrumlichtstrahlbündel zu eliminieren. Die Optik kann kostengünstig ausgeführt und zudem kann das Zentrumlichtstrahlbündel als Peilstrahl bei der Entfernungsmessung genutzt werden.

Die Lichtstrahlbündel können jeweils im Querschnitt senkrecht zur Strahlrichtung verschiedene Querschnittsflächen aufweisen. Besonders vorteilhaft besitzen die Lichtstrahlbündel jeweils jedoch senkrecht zur Strahlrichtung im wesentlichen elliptische Querschnittsflächen, wodurch ein optisch geringer Aufwand erreichbar ist, d.h. kostengünstige Optiken verwendet werden können.

Ferner besitzt der Lichtzeiger vorteilhaft eine Stelleinheit, über die die Anzahl der Lichtstrahlbündel veränderbar ist. Bei kleinen Distanzen kann eine besonders vorteilhafte Kennzeichnung des Meßsignals mit seinem Divergenzwinkel mit mehreren Lichtstrahlbündeln und bei großen Distanzen kann eine ausreichende Intensität mit wenigen Lichtstrahlbündeln erreicht werden. Über die Stelleinheit können einzelne Lichtquellen, beispielsweise Dioden, ein- und ausschaltbar und/oder besonders vorteilhaft können Teile der Optik bewegbar ausgeführt sein. Beispielsweise können über die Stelleinheit Linsen verdreht und/oder ausgetauscht werden.

Die Stelleinheit kann handbetrieben, elektrisch oder elektromagnetisch betrieben ausgeführt sein. Ist die Stelleinheit elektrisch oder elektromagnetisch betrieben, kann über eine Steuereinheit die Anzahl der Lichtstrahlbündel vorteilhaft auf die zu messende Entfernung automatisch angepaßt werden, wodurch der Komfort gesteigert und stets eine bestmögliche Kennzeichnung des Meßsignals mit seinem Divergenzwinkel erreicht werden kann.

In einer weiteren Ausgestaltung der Erfindung wird vorgeschlagen, daß der Lichtzeiger zumindest eine Stelleinheit aufweist, über die zumindest ein Teil des Lichtzeigers bewegbar ist und zumindest ein Lichtstrahlbündel zur Kennzeichnung des sich divergent ausbreitenden Meßsignals in verschiedene Richtungen aussendbar ist. Es kann mit einer einfachen, kostengünstigen und von der Leistung zulässigen Konstruktion mit wenigen Lichtstrahlbündeln, die eine hohe Intensität aufweisen, über eine große Entfernung eine gute Kennzeichnung des Meßsignals mit seinem Divergenzwinkel erreicht werden. Die Stelleinheit kann handbetrieben oder vorteilhaft elektrisch oder elektromagnetisch betrieben ausgeführt sein, wodurch das Lichtstrahlbündel während eines Entfernungsmeßvorgangs in seiner Ausstrahlrichtung kontinuierlich oder schrittweise durch die Stelleinheit automatisch verstellt werden kann.

Über die Stelleinheit kann die Lichtquelle und/oder ein Teil der Optik des Lichtzeigers bewegbar ausgeführt sein. Ist die Lichtquelle von einem Laser gebildet, kann vorteilhaft mit einer kleinen Bewegung das Meßsignal mit seinem Divergenzwinkel gut gekennzeichnet werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Ultraschallentfernungsmeßgerät mit einem Lichtzeiger schräg von oben,
- Fig. 2: einen Ausschnitt des Lichtzeigers aus Fig. 1 in einer Seitenansicht,
- Fig. 3: vom Lichtzeiger aus Fig. 1 erzeugte Lichtflekke auf einem Gegenstand,
- Fig. 4: einen Ausschnitt eines zu Fig. 1 alternativen Lichtzeigers mit einer elektrisch angetriebenen Stelleinheit,
- Fig. 5: vom Lichtzeiger aus Fig. 4 erzeugte Lichtflekke auf einem Gegenstand und
- Fig.6: von einem zu Fig. 4 alternativen Lichtzeiger erzeugte Lichtflecke auf einem Gegenstand.

### Beschreibung der Ausführungsbeispiele

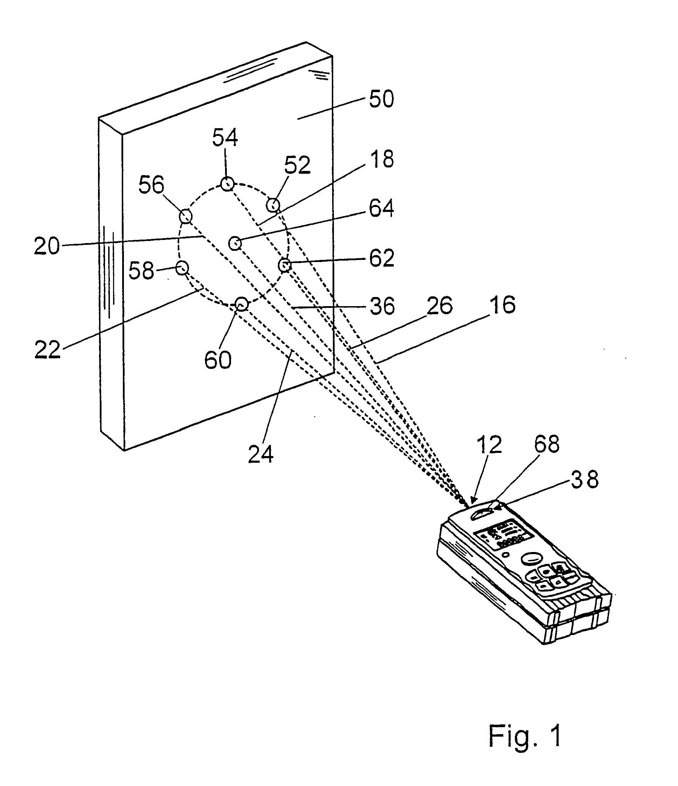

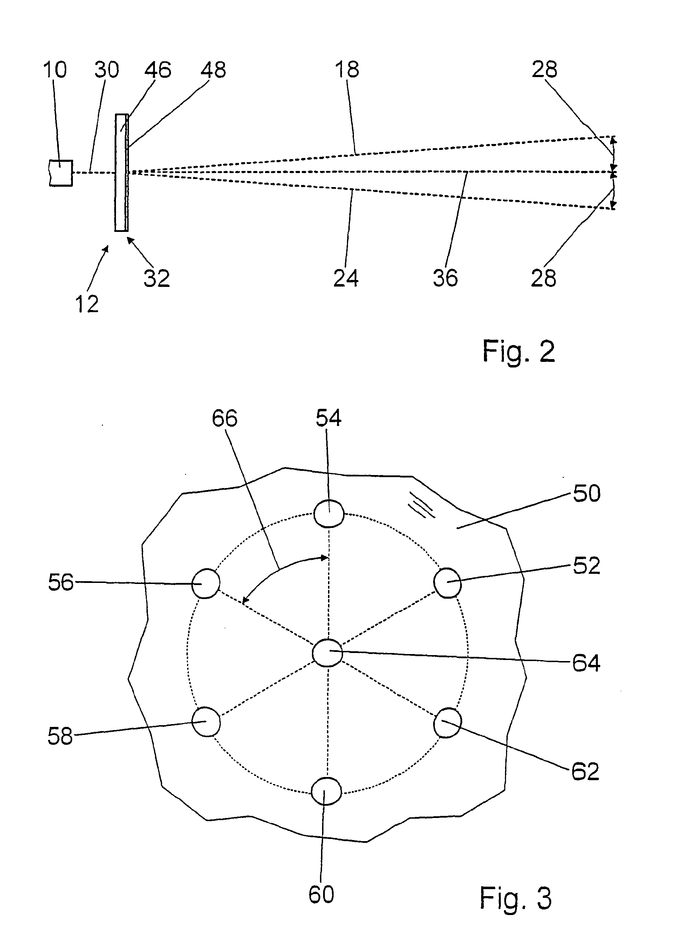

Fig. 1 zeigt ein Ultraschallentfernungsmeßgerät mit einem sich divergent ausbreitenden Ultraschallmeßsignal. Das Ultraschallentfernungsmeßgerät besitzt einen Lichtzeiger 12 mit einem Laser 10 (Fig. 2).

Erfindungsgemäß sind über den Lichtzeiger 12 sechs zueinander sich divergent ausbreitende Lichtstrahlbündel 16, 18, 20, 22, 24, 26 zum Kennzeichnen des Meßsignals mit seinem Divergenzwinkel aussendbar. Ein Divergenzwinkel 28 von 5° der Lichtstrahlbündel 16, 18, 20, 22, 24, 26 entspricht im wesentlichen dem Divergenzwinkel des Meßsignals. Je nach Anwendungsfall kann der Divergenzwinkel des Meßsignals und damit auch der Divergenzwinkel der Lichtstrahlbündel auch größer oder kleiner als 5° ausgeführt sein. Die Lichtstrahlbündel 16, 18, 20, 22, 24, 26 sind auf einem Kegelmantel jeweils um einen Winkel 66 von 60° versetzt angeordnet (Fig. 3). Die einzelnen Lichtstrahlen in einem Lichtstrahlbündel 16, 18, 20, 22, 24, 26 sind im wesentlichen parallel zueinander ausgerichtet. Mit den Lichtstrahlbündeln 16, 18, 20, 22, 24, 26 kann eine Zielfläche des Meßsignals in einer Entfernung von 20m noch gut sichtbar gemacht werden.

Neben den sechs Lichtstrahlbündeln 16, 18, 20, 22, 24, 26 sendet der Lichtzeiger 12 ein Zentrumlichtstrahlbündel 36 aus (Fig. 1 bis 3). Die Lichtstrahlbündel 16, 18, 20, 22, 24, 26, 36 entstammen dem Laser 10 und sind aus einem Lichtstrahlbündel 30 über eine diffraktive Optik 32 erzeugt. Die Optik 32 besitzt eine Linse 46 mit einem Beugungsgitter 48, über das eine konstruktive und eine destruktive Interferenz erzeugbar ist.

Die Lichtstrahlbündel 16, 18, 20, 22, 24, 26, 36 besitzen senkrecht zur Strahlrichtung im wesentlichen elliptische Querschnittsflächen und erzeugen auf einem Gegenstand 50 jeweils elliptische Lichtflecke 52, 54, 56, 58, 60, 62, 64 (Fig. 3). Die Anzahl der auf dem Kegelmantel gleichmäßig verteilten Lichtstrahlbündel 16, 18, 20, 22, 24, 26 kann durch eine Stelleinheit 38 für große Entfernungen auf drei und für besonders kurze Entfernungen auf zwölf erhöht werden. Die Stelleinheit 38 besitzt hierfür ein von Hand betätigbares Stellrad 68, über das die Linse 46 verdrehbar ist.

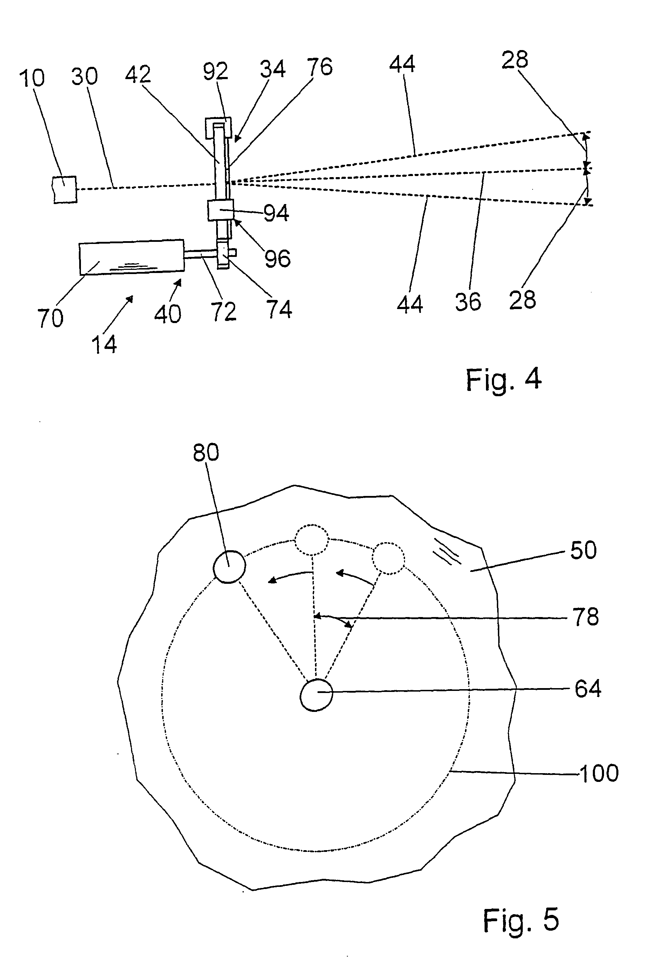

In Fig. 4 und 5 ist ein Ausschnitt eines alternativen Lichtzeigers 14 dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in Fig. 1 bis 3 verwiesen werden.

Der Lichtzeiger 14 besitzt eine Stelleinheit 40 mit einem Elektromotor 70, mit dem über eine Antriebswelle 72 und ein Zahnrad 74 eine Linse 42 einer Optik 34 schrittweise drehbar ist. Die Linse 42 besitzt ein Beugungsgitter 76, über das aus einem Lichtstrahlbündel 30 eines Lasers 10 ein Zentrumlichtstrahlbündel 36 und ein zweiter Lichtstrahlbündel 44 mit einem Divergenzwinkel 28 von 5° zum Zentrumlichtstrahlbündel 36 erzeugbar ist.

Der Laser 10 wird während eines Entfernungsmeßvorgangs gepulst betrieben. Sobald der Laser 10 abgeschaltet wird, dreht der Elektromotor 70 die Linse 42 um einen Winkel 78 von 40° weiter (Fig. 5). Die Linse 42 ist in drei, jeweils um 120° versetzt angeordneten Lagerbauteilen 92, 94, 96 drehbar gelagert. Durch die Drehbewegung wird das Lichtstrahlbündel 44 zur Kennzeichnung des sich divergent ausbreitenden Meßsignals in unterschiedliche Richtungen ausgesendet, und zwar wird das Lichtstrahlbündel 44 senkrecht zur Strahlrichtung entlang einer Kegelmantelfläche verstellt. Auf einem Gegenstand 50 entsteht ein elliptischer Lichtfleck 80, der entlang einer Kreisbahn 100 verläuft.

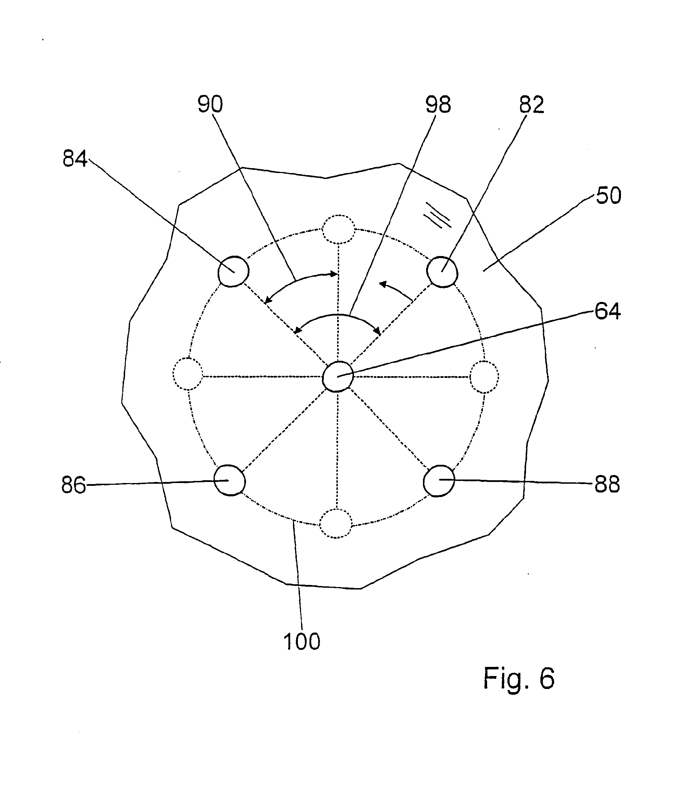

Fig. 6 zeigt von einem zu Fig. 4 alternativen, nicht näher dargestellten Lichtzeiger erzeugte Lichtflecke 64, 82, 84, 86, 88 auf einem Gegenstand 50. Anstatt zwei Lichtstrahlbündel werden mit einer Linse fünf Lichtstrahlbündel erzeugt. Vier der Lichtstrahlbündel sind jeweils um einen Winkel 98 von 90° versetzt auf einer Kegelmantelfläche angeordnet. Über eine Stelleinheit wird die Linse schrittweise um einen Winkel 90 um jeweils 45° bei abgeschaltetem Laser weitergedreht.

### Bezugszeichen

- 10: Lichtquelle
- 12: Lichtzeiger
- 14: Lichtzeiger
- 16: Lichtstrahlbündel
- 18: Lichtstrahlbündel
- 20: Lichtstrahlbündel
- 22: Lichtstrahlbündel
- 24: Lichtstrahlbündel
- 26: Lichtstrahlbündel
- 28: Divergenzwinkel
- 30: Lichtstrahlbündel
- 32: Optik
- 34: Optik
- 36: Lichtstrahlbündel
- 38: Stelleinheit
- 40: Stelleinheit
- 42: Teil
- 44: Lichtstrahlbündel
- 46: Linse
- 48: Beugungsgitter
- 50: Gegenstand
- 52: Lichtfleck
- 54: Lichtfleck
- 56: Lichtfleck
- 58: Lichtfleck
- 60: Lichtfleck
- 62: Lichtfleck
- 64: Lichtfleck
- 66: Winkel
- 68: Stellrad
- 70: Elektromotor
- 72: Antriebswelle
- 74: Zahnrad
- 76: Beugungsgitter
- 78: Winkel
- 80: Lichtfleck
- 82: Lichtfleck
- 84: Lichtfleck
- 86: Lichtfleck
- 88: Lichtfleck
- 90: Winkel
- 92: Lagerbauteil
- 94: Lagerbauteil
- 96: Lagerbauteil
- 98: Winkel
- 100: Kreisbahn

## Patentansprüche

1. Entfernungsmeßgerät mit einem sich divergent ausbreitenden Meßsignal, insbesondere Ultraschall und/oder Radar, und einem zumindest eine Lichtquelle (10) aufweisenden Lichtzeiger (12, 14), **dadurch gekennzeichnet, daß** über den Lichtzeiger (12) mehrere, in der Anzahl begrenzte und sich zueinander divergent ausbreitende Lichtstrahlbündel (16, 18, 20, 22, 24, 26) aussendbar sind, die im wesentlichen das Meßsignal mit seinem Divergenzwinkel (28) kennzeichnen.

2. Entfernungsmeßgerät nach Anspruch 1, **dadurch gekennzeichnet, daß** zumindest eine Lichtquelle (10) von einem Laser gebildet ist.

3. Entfernungsmeßgerät nach Anspruch 1 oder 2, **dadurch gekennzeichnet, daß** zumindest mehrere Lichtstrahlbündel (16, 18, 20, 22, 24, 26) einer gemeinsamen Lichtquelle (10) entstammen, und die zueinander divergierenden Lichtstrahlbündel (16, 18, 20, 22, 24, 26) aus einem gemeinsamen Lichtstrahlbündel (30) über eine Optik (32) erzeugt sind.

4. Entfernungsmeßgerät nach Anspruch 3, **dadurch gekennzeichnet, daß** über den Lichtzeiger (12) gleichzeitig mehr als zwei und weniger als vierzehn Lichtstrahlbündel (16, 18, 20, 22, 24, 26) aussendbar sind.

5. Entfernungsmeßgerät nach einem der vorhergehenden Ansprüche, daß über den Lichtzeiger (12) ein Zentrumlichtstrahlbündel (36) aussendbar ist.

6. Entfernungsmeßgerät nach einem der vorhergehenden Ansprüche, **dadurch gekennzeichnet, daß** die Lichtstrahlbündel (16, 18, 20, 22, 24, 26, 36) senkrecht zur Strahlrichtung jeweils im wesentlichen elliptische Querschnittsflächen besitzen.

7. Entfernungsmeßgerät nach einem der vorhergehenden Ansprüche, **dadurch gekennzeichnet, daß** der Lichtzeiger (12) eine Stelleinheit (38) aufweist, über die die Anzahl der Lichtstrahlbündel (16, 18, 20, 22, 24, 26, 36) veränderbar ist.

8. Entfernungsmeßgerät nach Anspruch 7, **dadurch gekennzeichnet, daß** die Stelleinheit elektrisch oder elektromagnetisch betrieben ist, und eine Steuereinheit abhängig von einer zu messenden Entfernung die Anzahl der LichtstrahLbündel einstellt.

9. Entfernungsmeßgerät nach dem Oberbegriff des Anspruchs 1 oder nach einem der vorhergehenden Ansprüche, **dadurch gekennzeichnet, daß** der Lichtzeiger (14) zumindest eine Stelleinheit (40) aufweist, über die zumindest ein Teil (42) des Lichtzeigers (14) bewegbar ist, und zumindest ein Lichtstrahlbündel (44) zur Kennzeichnung des sich divergent ausbreitenden Meßsignals in verschiedene Richtungen aussendbar ist.

10. Entfernungsmeßgerät nach Anspruch 9, **dadurch gekennzeichnet, daß** über die Stelleinheit (40) ein Teil (42) einer Optik (34) des Lichtzeigers (14) bewegbar ist.

11. Entfernungsmeßgerät nach Anspruch 9 oder 10, **dadurch gekennzeichnet, daß** über die Stelleinheit zumindest eine Lichtquelle des Lichtzeigers bewegbar ist.

## Claims

1. Distance measuring instrument with a divergently propagating measuring signal, in particular ultrasound and/or radar, and a light pointer (12, 14) having at least one light source (10), **characterized in that** a plurality of light beams (16, 18, 20, 22, 24, 26), which are limited in number, propagate divergently with respect to one another and substantially characterize the measuring signal with its angle of divergence (28), can be emitted by the light pointer (12).

2. Distance measuring instrument according to Claim 1, **characterized in that** at least one light source (10) is formed by a laser.

3. Distance measuring instrument according to Claim 1 or 2, **characterized in that** at least a plurality of light beams (16, 18, 20, 22, 24, 26) emanate from a common light source (10) and the mutually diverging light beams (16, 18, 20, 22, 24, 26) are generated by an optical means (32) from a common light beam (30).

4. Distance measuring instrument according to Claim 3, **characterized in that** more than two and less than fourteen light beams (16, 18, 20, 22, 24, 26) can be emitted simultaneously by the light pointer (12).

5. Distance measuring instrument according to one of the preceding claims, **characterized in that** a central light beam (36) can be emitted by the light pointer (12).

6. Distance measuring instrument according to one of the preceding claims, **characterized in that** the light beams (16, 18, 20, 22, 24, 26, 36) in each case have substantially elliptical cross-sectional areas perpendicular to the direction of the beam.

7. Distance measuring instrument according to one of the preceding claims, **characterized in that** the light pointer (12) has an adjustment unit (38) which can change the number of light beams (16, 18, 20, 22, 24, 26, 36).

8. Distance measuring instrument according to Claim 7, **characterized in that** the adjustment unit is operated electrically or electromagnetically and a control unit sets the number of light beams as a function of a distance to be measured.

9. Distance measuring instrument according to the preamble of Claim 1 or according to one of the preceding claims, **characterized in that** the light pointer (14) has at least one adjustment unit (40), which can move at least a part (42) of the light pointer (14), and at least one light beam (44) for characterizing the divergently propagating measuring signal can be emitted in various directions.

10. Distance measuring instrument according to Claim 9, **characterized in that** a part (42) of an optical means (34) of the light pointer (14) can be moved by the adjustment unit (40).

11. Distance measuring instrument according to Claim 9 or 10, **characterized in that** at least one light source of the light pointer can be moved by the adjustment unit.

## Revendications

1. Appareil de télémétrie avec un signal de mesure se déployant de façon divergente, notamment un appareil à ultrasons et/ou un radar et au moins un indicateur lumineux (12, 14) ayant une source lumineuse (10),
**caractérisé en ce que**
l'indicateur lumineux (12) émet plusieurs faisceaux de rayons lumineux (16, 18, 20, 22, 24, 26) en nombre limité, qui se déploient de façon divergente les uns par rapport aux autres, ces faisceaux caractérisant principalement le signal de mesure avec son angle divergent (28).

2. Appareil de télémétrie selon la revendication 1,
**caractérisé en ce qu'**
au moins une source lumineuse (10) est un laser.

3. Appareil de télémétrie selon la revendication 1 ou 2,
**caractérisé en ce qu'**
au moins plusieurs faisceaux lumineux (16, 18, 20, 22, 24, 26) proviennent d'une source lumineuse (10) commune et les faisceaux de rayons lumineux (16, 18, 20, 22, 24, 26) divergents sont générés à partir d'un faisceau de rayons lumineux communs (30) par l'intermédiaire d'une optique (32).

4. Appareil de télémétrie selon la revendication 3,
**caractérisé en ce que**
par l'indicateur lumineux (12) on émet simultanément plus de deux et moins de quatorze faisceaux de rayons lumineux (16, 18, 20, 22, 24, 26).

5. Appareil de télémétrie selon l'une des revendications précédentes,
**caractérisé en ce que**
par l'indicateur lumineux (12) on émet un faisceau de rayons à lumière centralisée (36).

6. Appareil de télémétrie selon l'une des revendications précédentes,
**caractérisé en ce que**
les faisceaux de rayons lumineux (16, 18, 20, 22, 24, 26, 36) ont une surface de section pratiquement elliptique perpendiculairement à la direction du faisceau.

7. Appareil de télémétrie selon l'une des revendications précédentes,
**caractérisé en ce que**
l'indicateur lumineux (12) comporte une unité de réglage (38) par laquelle on peut modifier le nombre de faisceaux lumineux (16, 18, 20, 22, 24, 26, 36).

8. Appareil de télémétrie selon la revendication 7,
**caractérisé en ce que**
l'unité de réglage est à fonctionnement électrique ou électromagnétique et une unité de commande règle le nombre de faisceaux de rayons lumineux en fonction de la distance à mesurer.

9. Appareil de télémétrie selon le préambule de la revendication 1 ou l'une des revendications précédentes,
**caractérisé en ce que**
l'indicateur lumineux (14) comporte au moins une unité de réglage (40) par laquelle au moins une partie (42) de l'indicateur lumineux (14) peut être déplacée et au moins un faisceau de rayons lumineux (44) pour caractériser le signal de mesure qui se développe de façon divergente dans différentes directions

10. Appareil de télémétrie selon la revendication 9,
**caractérisé en ce qu'**
une partie d'une optique (34) de l'indicateur lumineux (14) est déplacée par l'unité d'actionnement (40).

11. Appareil de télémétrie selon la revendication 9 ou 10,
**caractérisé en ce qu'**
au moins une source lumineuse de l'indicateur lumineux est déplacée par l'unité de réglage.
